# EUROPEAN PATENT APPLICATION

(11) **EP 2 012 446 A1**
(43) Date of publication of application: **07.01.2009**
(21) Application number: 07111974.7
(22) Date of filing: 06.07.2007
(51) Int. Cl.: H04B 7/26

(54) **Higher layer synchronization between base stations**

(71) Applicant: Nokia Corporation, 01250 Espoo (FI)
(72) Inventor: LI, Zexian, 02760, Espoo (FI); MIETTINEN, Natalia, 02650, Espoo (FI); PANDEY, Ravi, 02430, Masala (FI); PICHNA, Roman, 02620, Espoo (FI)
(74) Representative: TBK-Patent

(57) **Abstract**

Embodiments of the described invention provide a higher layer synchronization between base stations in a multicast broadcast system or service. A first device may send a time information to a second device which second device responds thereto by initiating a synchronization procedure.

## Description

The invention generally relates to methods, devices, modules and computer program products for a mobile network, e.g. an IP based mobile network, such as a worldwide interoperability for microwave access, WiMAX, network.

WiMAX Forum, WMF, Release 1.5 includes recommendations and requirements for network based on WiMAX Forum certified products. WMF Service Provider Working Group, SPWG, requirements for WMF Release 1.5 cover support for multicast broadcast service, MCBCS or MBS, based on multicast broadcast, MBS, support in IEEE 802.16e. Part of the requirements is to support MBS zones, see details in R-343, R-345, R-346, R-347, R-349, R-363, R-472 of SPWG requirements. MBS zones are areas where base stations, BSs, transmit identical signals at the same frequency with identical contents. It is a form of layer 1, L1, macro-diversity where a terminal within a MBS zone does not have to perform any handover, HO, for MBS and can be in idle state for other purposes.

The MBS architecture in WMF may be built on top of Rel. 1 architecture where some service infrastructure will most likely be reused, e.g. open mobile alliance broadcast services, OMA BCAST, specification for Mobile Broadcast Services, and others.

Embodiments of the invention address higher layer synchronization in a mobile network, e.g. an IP based mobile network, such as WiMAX.

When macro diversity is used in multicast or broadcast services, loss of synchronization may result due to destructive interference. Loss of higher layer synchronization at the base station, BS, may happen e.g. due to following or other factors: latency and jitter in transport and interface devices; different processing power in base stations; a base station booting with empty buffer; change of packets sequence due to pass on running, etc.

According to embodiments, a method is provided as defined in one or more of the method claims. Further, devices, system, a computer program product, computer program, chip and module are provided in accordance with respective claims or at least one, more or all of the embodiments of the invention.

In accordance with one, more or all of the embodiments of the invention, a method or devices, system, computer program product, computer program, chip and/or module, is provided for synchronization e.g. at layer 3 or a higher layer in a network. Synchronization e.g. of base stations at lower layers is crucial for all TDD systems or system using downlink combining, and it is used in WiMAX and also known in WCDMA, CDMA and other technologies. However, such lower layer synchronization of frequency and frame timing at BS is not sufficient for transmitting identical contents, as the contents is delivered asynchronously into the BS e.g. via IP-based asynchronous backhaul transport network. Therefore embodiments of the invention provide a synchronization of the transmitted content as well. Embodiments are providing means and functions or methods of achieving it. Synchronous backhaul transport is not used in WiMAX or in 3GPP LTE/SAE.

Embodiments of the invention may comprise any one of the following in any arbitrary combination:
a method for providing a higher layer synchronization between base stations in a multicast broadcast system or service wherein a first device sends a time information to a second device which second device responds to the receiving of the time information by using the time information for synchronising with the first device;
wherein the time information is an absolute time or transmission time, or a sequence number of a generic routing encapsulation, GRE, message,
a method wherein the time information is an Internet time, global time, atomic time, international atomic time, universal time, or universal time coordinated,
wherein a first device acts or is configured or adapted to act as a synchronization master of a zone, and at least one base station acts or is configured or adapted to act as a synchronization slave of the zone,
wherein the first device is a base station or a gateway such as an access services network gateway, and the second device is a base station,
wherein the first device is a base station in a decentralized implementation, or a gateway such as an access services network gateway in a centralized implementation,
wherein a synchronization master sends in regular or pre-defined intervals transmission time to be associated with a particular packet(s) to one or more of synchronization slaves for initiating a resynchronization procedure,
wherein a synchronization master adapts higher layer scheduling to accommodate a balance between latency and resulting buffering,
wherein the higher layer synchronization is a synchronization of layer 3 or a higher layer in the multicast broadcast system or service,
wherein the time information is used for a slip recovery mechanism,
a system for providing a higher layer synchronization between base stations in a multicast broadcast system or service
wherein a first device is adapted to send an absolute or transmission time information to a second device which second device is adapted to respond, when receiving the absolute time information, by synchronising with the first device using the time information,
wherein the first device is a base station, a gateway or a synchronization master of a zone, and the second device is a base station which is configured to act as a synchronization slave of the zone,
a computer program product comprising code means for performing methods steps of a method as mentioned above, when run on a computer,
a semiconductor chip or module comprising means for performing methods steps of a method as mentioned above,
a device, in particular base station or gateway, for providing a higher layer synchronization between the device and another network entity in a multicast broadcast system or service, wherein the device is adapted to send or receive in regular or pre-defined intervals transmission time to be associated with a particular packet(s) for initiating a synchronization or resynchronization procedure with the another network entity,
   wherein the device is configured or adapted to act as a synchronization master of a zone such as a multicast broadcast, MBS, zone,
a device which is adapted to act as a synchronization master providing higher layer scheduling to accommodate a balance between latency and resulting buffering,
   wherein the device is a synchronization master which is adapted to send in regular or pre-defined intervals transmission time to be associated with a particular packet(s) to one or more of synchronization slaves for initiating a resynchronization procedure.

In accordance with one, more or all of the embodiments of the invention, a solution is proposed for providing higher layer (network layer and above) synchronization. The network layer can be called L3, but from user IP perspective L3 is IP, and in WiMAX there is still a GRE layer in between. In WiMAX ASN-GW-to-BS interface consists of these layers:
transport/transport_IP/GRE/user_IP. The goal is to synchronize the user_IP. The invention proposes one or more suitable methods and devices for synchronizing the GRE layer. The mentioned GRE layer is sitting on top of transport and anychrononous transport_IP. The higher layer (network layer and above) synchronization can in at least one or more embodiments be achieved via a synchronization master which may be provided in a gateway such as an access services network gateway, ASN-GW, or certain base station, BS, of the BS zone. The synchronization master may send an absolute time or transmission time assigned to the packets to the BS. To make sure a particular packet is transmitted at a particular time, the contents are accompanied with an instruction at what time the packet should be transmitted. Base stations BS have time reference for other purposes, derived, e.g., from GPS system. This absolute or transmission time is the trigger for the BS sending a respective packet to the mobile station, MS. When, in the following, the term absolute time is mentioned, this term is equal to or represents the transmission time of a respective packet at which this packet is to be sent.

In one or more of the embodiments an MS is receiving the same packet from two separate base stations. The radio receiver in MS will combine those two packets into a single one. If both legs of the diversity transmission contain the same contents, MS will recover the information. If BSs synchronously sent two different IP packets, MS would combine them and reconstruct an invalid packet. This problem can be avoided by using an absolute time or transmission time indicating when a respective packet is to be sent.

All the BSs in the multicast or diversity zone can derive the time e.g. from a global positioning system, GPS, signal which includes GPS time. GPS time is based on the same time standard as international atomic time TAI and labels time as weeks and seconds of week.

The synchronization master adapts the higher layer scheduling to accommodate the balance between latency needs and resulting buffering.

Embodiments of the invention will be described in the following with reference to the drawings.

### Brief Description of the Drawings

Fig. 1 shows a basic high level WMF MBS architecture,
Fig. 2 illustrates a more detailed example of an MBS architecture,
Fig. 3 an implementation showing different paths in MBS zone combining,
Fig. 4 an embodiment of a transport topology with daisy-chained base stations,
Fig. 5 an example of skipping of a frame at a base station due to missing a scheduling deadline,
Fig. 6 an example of a base station booting with an empty buffer,
Fig. 7 an embodiment of the invention showing a decentralized higher layer synchronization solution, and
Fig. 8 an embodiment of the invention providing a centralized higher layer synchronization solution.

### Description of Embodiments

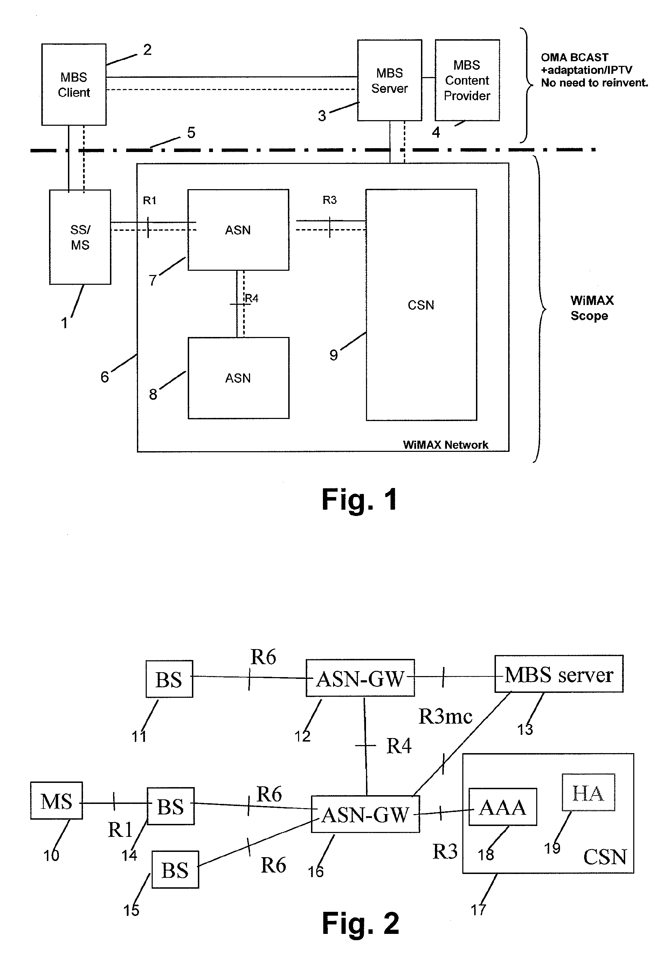

Fig. 1 shows a basic high level WMF MBS architecture, and illustrates an architecture structure, e.g. according to a WMF NWG MBS Architecture, in which a WiMAX network 6 includes one or more, here e.g. two, access service(s) networks, ASNs, 7, 8 and a connectivity service(s) network, CSN 9. A terminal 1 such as a mobile station MS or subscriber station SS is able to attach or connect to an access services network ASN 7, 8 via an interface R1, as shown by the solid and broken lines indicating signalling and traffic connections. The station 1 is further able to attach or connect to a client such as a multicast and broadcast services, MBS, client 2. The components shown above the horizontal dot-and-dash line 5 are part of a MBS architecture such as open mobile alliance broadcast services, OMA BCAST +adaptation/IPTV (http://en.wikipedia.org/wiki/Iptv), whereas the components below that line 5 are WiMAX components. The MBS architecture optionally includes at least one of a multicast and broadcast services, MBS, server 3, and a multicast and broadcast services, MBS, content provider 4. The MBS server 3 can directly communicate with the WiMAX network 6 as shown by the solid and broken lines indicating signalling and traffic connections.

In this and any other embodiment, the terminal 1 or mobile node or station can be a mobile or stationary device such as a mobile phone, user equipment, mobile station, chip, module, a computer such as a personal digital assistant, laptop, or any other type of communication device.

Embodiments of the invention relate to worldwide interoperability for microwave access, WiMAX, or any other type of network concept or structure such as wireless local area network etc.

The terminal and/or an access network or access services network may be configured for communication based on mobile worldwide interoperability for microwave access, WiMAX.

Fig. 2 shows an embodiment of a WiMAX architecture with MBS architecture to which the features and embodiments of the invention may be applied. A mobile station MS or SS 10 may communicate with a base station 11, 14, 15 or an access service(s) network ASN via an interface R1. The access service(s) network may include or communicate with one or more of the base stations BS 11, 14, 15 and one or more access services network gateways ASN-GW 12, 16 via interface R6, which may act as, or form part of, a foreign agent FA. The access services network ASN may communicate with another access services network via interfaces R4, and with a connectivity service network, CSN, 17 of e.g. a network service provider NSP via interface R3. The connectivity service network, CSN, 17 of the network service provider NSP may further include a function, module, device 18 for authentication, authorization and accounting, AAA, and a home agent HA 19 The connectivity service network 17 of a network service provider NSP may communicate with another connectivity service network CSN of another operator. The access services network gateway ASN-GW 12, 16 may communicate with a MBS server 13 via interface R3mc. The MBS server 13 is directly connected to the ASN-GW 12, 16 in this embodiment. The access services network ASN takes care of mobility and radio resource management, RRM, of MBS bearers.

In accordance with at least one or more or all of the embodiments of the invention, a synchronization is provided at layer L2 of the OSI model. However, even if synchronization is provided at layer L2 of the OSI model, destructive interference may nevertheless result e.g. if different IP packets are combined on top of synchronized layer L2.

Embodiments provide higher layer synchronization e.g. when macro-diversity is used in e.g. multicast broadcast. In accordance with at least one or all of the embodiments of the invention, methods for higher layer synchronization are provided in IP based radio access networks.

The higher layer synchronization in accordance with one or more or all of the embodiments of the invention for MBS zones is also usable for any other architecture such as other final MBS architecture in NWG, e.g., the server such as MBS server can be attached to ASN-GW or to other network elements.

Embodiments as described are also applicable to, and able to solve similar problems, when applied to other network types such as long term evolution, LTE, multimedia broadcast multicast service, MBMS, single frequency network, SFN, areas.

In WiMAX, MBS zones are based on L1 DL macro-diversity combining at MS. If the signals from zone BSs are not identical, diversity combining results in destructive interference. L2 synchronization can be maintained due to TDD. Higher layers are in accordance with at least one or all of the embodiments of the invention, scheduled for the same bits in the same symbols across R1. The mapping of higher layers to L2 across R1 has to be synchronized between BSs.

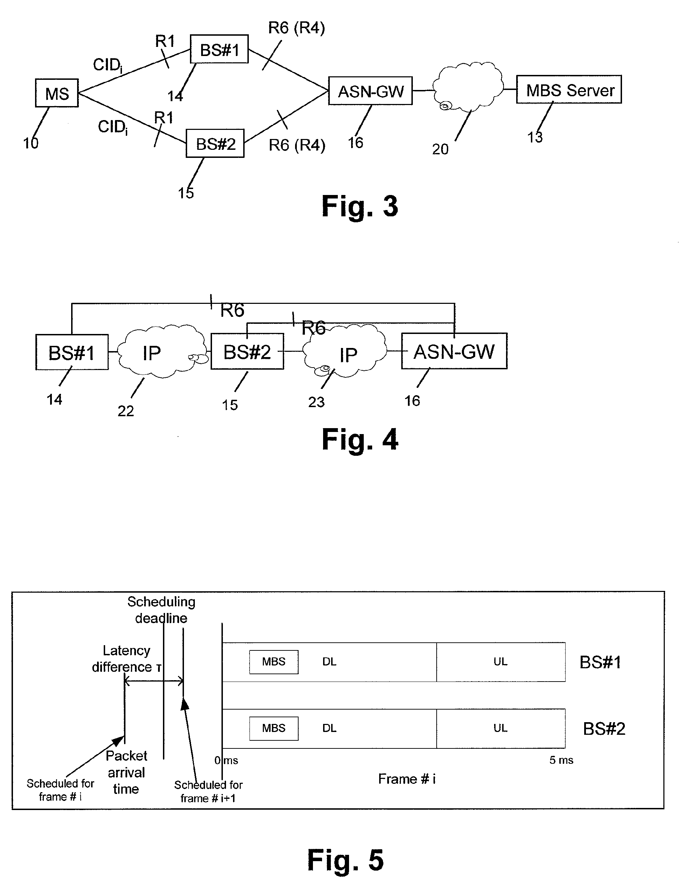

Fig. 3 illustrates an example of different paths in MBS zone combining which may be used e.g. in connection with the embodiment of Fig. 2. As shown in Fig. 3, the mobile station MS 10 is combining two streams arriving to it via different physical and logical paths from base stations BS#1, e.g. 14 of Fig. 2, BS#2, e.g. 15 of Fig. 2. A connection identifier CIDᵢ is provided for identifying the connection and thus the streams. The two streams are generated or received by the ASN-GW 16 which is connected to an MBS server, e.g. 13, via a network 20 such as an IP network like Internet. Timing differences in R1 interface are due to different propagation distance and can be absorbed by OFDM symbol guard interval. Because the effective contribution to the latency by R1 interface is zero, if streams should arrive at MS 19 synchronously, they have to be synchronized at BSs 14, 15.

There are several contributing factors to the loss of higher layer synchronization at BSs, including e.g. latency and jitter in transport and interface devices, different processing power in BSs, and/or BS booting with empty buffer.

Fig. 4 illustrates an embodiment of a structure in which a loss of higher layer synchronization may occur due to latency difference.

According to Fig. 4, a transport topology is provided with daisy-chained base stations BS#1, BS#2. An access services network gateway ASN-GW has interfaces R6 directly to the base stations BSs. Further, the base station BS#2 is connected to the ASN-GW and to the base station BS#1 via IP networks.

In such a structure, a R6/R4 transport latency and jitter difference between the base stations, e.g. 14, 15, may occur. A L3-routed and L2-switched transport network, NW is provided in which the transport network has daisy-chained BSs 14, 15 and comprises an IP network 22 for connecting the base station 14, 15, and an IP network 23 for connecting the base station 15 and the ASN-gateway 16. With ASN GW 16 R6 scheduling latency and jitter difference, multiple synchronized packets compete for the same interface. Processing latency difference (different BSs with different hardware/software) can occur.

As a further example of synchronization loss, two BSs may have empty buffers. If packets arrive at the BSs with latency difference τ=0.1ms, the probability of scheduling deadline falling into τ= slipping probability=0.1ms/5ms=0.02, results in 2% probability of synchronization slip in every frame.

Fig. 5 illustrates an embodiment of a structure in which a skipping of a frame at BS#1 may occur due to missing the scheduling deadline. Fig. 5 shows a scheduling deadline (vertical line) between a scheduled packet arrival time for frame #i (vertical line to the left of the scheduling deadline), and a scheduled packet arrival time for frame #i+1 (vertical line to the right of the scheduling deadline). Frame #i is shown for BS#1 and BS#2 with downlink, DL, and uplink, UL parts, of the MBS, Multicast and Broadcast Services, frame having a duration of 5ms from time=0ms to 5ms. The latency difference between the scheduled packet arrival times is τ, tau. The frame #i is scheduled to be sent at the same time from the base stations BS#1, BS#2.

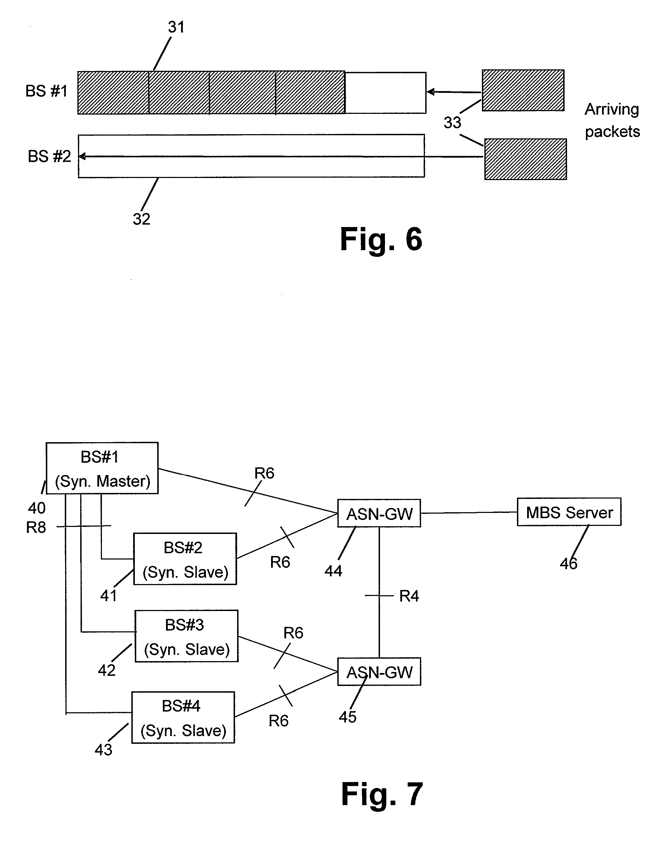

Fig. 6 illustrates an embodiment of a structure in which a loss of a higher layer synchronization may occur due to buffering. In this example, a base station BS #2 boots or base station BS #1 is slower than base station BS#2. When base station BS#2 boots with empty buffer 32, it starts transmission of a fresh arriving packet 33, whereas base station BS#1 still has some buffered packets in its queue 31 and stores, as shown, the fresh arriving packet at the queue end so that BS#1 will sent this packet 33 later than the time point of sending this same packet from BS#2. Fig. 6 shows a case where a new BS, BS#2, or a BS recovering after a failure or a software upgrade boots with empty buffer 32. This results in any newly and subsequently arrived packets getting to the head of the queue in BS#2 and causing prolonged trail of disruptive interference in the zone covered by base stations BS#1, BS#2. This loss of synchronization will last until all the stream buffers 31, 32, etc. in the zone will be emptied.

These problems may generally occur in cellular networks and may also be encountered in e.g. long term evolution, LTE, networks. When considering to solve this problem with the requirement on identical/synchronized transport path, it is not possible to apply such a solution to a big number of BSs in cellular networks. The solutions provided by the invention are also applicable to any such or other types of networks.

Fig. 7 shows an embodiment of the invention which provides a de-centralized Solution e.g. for small zones such as e.g., one site/BTS. The zone is defined by the coverage of this site or one or more base transceiver stations or base stations.

A base station, here 40, acts or is configured or adapted to act as a synchronization master of the zone, e.g. MBS zone. At least one, two, three or more base stations 41, 43, 43, act or are configured or adapted to act as a synchronization slave of the zone, e.g. MBS zone. The synchronization master 40 is able to connect or communicate with the synchronization slaves 41 to 43 via interface R8.

The synchronization master 40 and the synchronization slaves 41 to 43 are able to connect or communicate with one or more access services network gateways 44, 45 via interface R6. The access services network gateway 44, or 45, is able to connect or communicate with a server 46 which may be an MBS server.

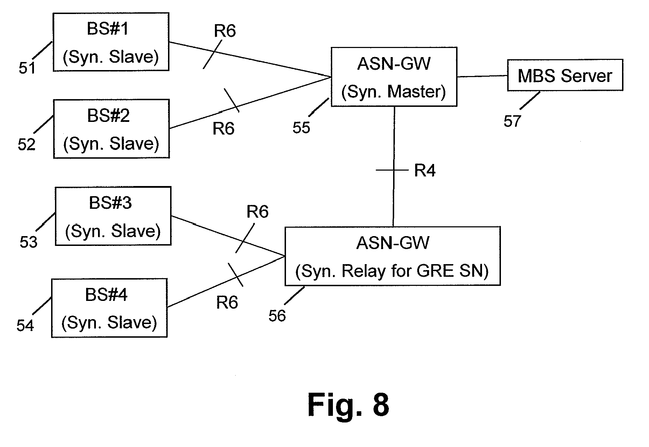

In the embodiment of Fig. 7, at least one of more of the following features is implemented in any arbitrary combination:
a BS-BS higher layer synchronization between the base stations 40 and 43 is provided e.g. over R8 or on top of interfaces R6-R6/R6-R4-R6,
one BS e.g. 40 acts as a content synchronization master of the MBS zone (a content synchronization master is a master of synchronization for information carried in layers above L2. It is logically different from a synchronization master used for lower layers),
over interface e.g. R8 or on top of R6-R6/R6-R4-R6 an MBS packet ID is coming together with absolute time for transmission,
in case a BS 41, 42, 43 can not get the packet in time (too big delay), the BS reports the loss event or loss statistics to the master BS 40 via a feedback channel, e.g. a new feedback channel (e.g., via collection with O&M system, or a dedicated control channel part of the higher layer synchronization system),
later on master BS 40 adapts the higher layer scheduling to accommodate the balance between latency needs and resulting buffering in an optimal way,
for large networks, synchronization hierarchy is provided to reduce signaling load which may lead, for this hierarchy, to additional delay and resulting buffering requirement at BSs, so that a more centralized solution scales better; the "synchronization hierarchy" can be implemented as the master-slave structure of Figs. 7, 8, and can also be generalized so that the master has his own master who controls a set of masters; as many hierarchy levels as necessary for scalability reasons can be added in big systems; synchronization data comprises one or more of the following: [MBS Flow ID (MAC Service Flow Identifier (SFID), Multicast Connection Identifier (M-CID) packet ID, absolute time/frame ID],
MBS Flow ID: M-CID is zone-unique but not used yet, SFID is already included in the R6 signaling,
packet ID: available protocols are IP/GRE/IP/UDP (application layer ID may not be available since application encryption is expected to be used in MBS); if usable, application layer ID can also be used,
in internet protocol, IP, if no packet ID is available, a time marking such as Internet Timestamp option (RFC 791) can be used,
ASN GW time stamps the inner IP packets, even if time stamping is known per se, it is a novel feature of doing it for GRE case or WiMAX,
(multi-casting in R6 would mean time value could change between creation of two IP transport packets),
in this embodiment, the network or entity can be implemented in such a manner that only one ASN GW, here 44, in the zone can make Time Stamp,
time granularity may be 1 ms.

The time stamp is, in accordance with at least one or more or all of the embodiments of the invention, an absolute time which can be any e.g. Internet Time, global time, atomic time e.g. according to international atomic time, TAI, universal time, UT, or universal time coordinated, UTC, etc.

For handling two packets arriving in ASN GW 44 within the same ms, several alternatives may be provided in accordance with at least one or more of the embodiments of the invention.

In accordance with at least one or more or all of the embodiments of the invention, an optional feature of inserting a time information into a packet, e.g. downlink packet, when a synchronization is to be effected, or e.g. into every Nth MBS IP header at ASN-GW, e.g. 44, is provided, which may also be used for a slip recovery mechanism. As mentioned above, the time information is indicating not a local time but a more general time which is independent or more global than the local time of the actual location, such as Internet Time, or global time or atomic time e.g. according to international atomic time, TAI, universal time, UT, or universal time coordinated, UTC. N can be any natural number of 1, 2 etc.

The BS 40, 41, 42, 43 checks the time information in a received IP packet or other type of frame. If this results in slip correction at BS, the BS needs to report the slipping. The slip correction is needed if BS gets a packet for transmission in time already passed. Then it has to inform the synchronization master to take into account the extra latency needed. Based on the report, synchronization master 40 can adapt interval (N value) and higher layer scheduling. Synchronization master chooses the transmission instants at BS as a compromise between the buffering requirements and likelihood of slipping.
- Timing: timing reference for the transmission time or absolute time can be obtained from GPS or any other system, including timing reference transmission over backhaul network or combinations of them. Frame_ID is not available in MAC and needs to be synchronized between BSs at boot time. (Frame ID is not defined by IEEE 802.16e. If the solution choice is to have a counter of frames, counters have to start at the same value at the same time and these have to be distributed and synchronized at the boot time of the base station. Frame synchronization is then maintained also for other purposes.

This solution also meets the needs of MBS architecture variant where MBS server would be connected directly to the BSs, and is directly applicable to such an architecture variant.

Fig. 8 shows an embodiment of the invention which provides a centralized solution. The solution is applicable e.g. for small zones such as e.g., one site/BTS but also for larger zones which are defined by the coverage of two or more sites or several base transceiver stations or base stations. The embodiment of Fig. 8 provides a centralized higher layer synchronization.

Several base stations 51 to 54 are implemented as synchronization slaves which are adapted or configured to communicate with, or are connected to, gateways 55 or 56 via interfaces e.g. R6, as shown in Fig. 8. Gateway 55 is an access services network gateway which acts as synchronization master and controls the synchronization or timing of the base stations 51 to 54.

The GRE sequence number (SN) is unique only between two adjacent nodes (ASN-GW - ASN-GW, ASN-GW - BS) and is shared by all flows between those, any intermediary node has to translate the used SN in the synchronization control plane. Gateway 56 is an access services network gateway which acts as synchronization relay for GRE SN.

The access services network gateway 55 is connected to or able to communicate with an MBS server 57. Further, the access services network gateways 55, 56 can communicate with each other via an interface R4.

In the embodiment of Fig. 8, at least one of more of the following features is implemented in any arbitrary combination:
the synchronization master is in ASN-GW 55 or MBS Server 57, optionally in the anchor functionality thereof (user, U, plane and control, C, plane),
an e.g. MBS U-Plane packet comes or is sent from ASN-GW 55 together with the absolute time information, e.g. in its header, for transmission to the BS 51 or 52, or via access services network gateway 56 to base station 53 or 54,
the base station receiving this packet will detect and signal a delay, e.g. always or only when exceeding a certain, defined or pre-defined value, to ASN-GW 55 or MBS 57 anchor functionality,
in the case a BS can not get the packet in time (too big delay), the BS reports the loss event or loss statistics to the synchronization master, e.g. via a feedback channel, later on or immediately the synchronization master adapts the higher layer scheduling to accommodate the balance between latency needs and resulting buffering in an efficient or optimal way.

A control channel between BSs and synchronization master is provided. In a first alternative, the control information such as time stamp or absolute time may be embedded into the user plane, U-Plane. The data path and its set up procedures may be modified as needed, with additional layering overhead and possible IP segmentation. The synchronization data may be just absolute time.

In another alternative, U-Plane and C-Plane information may be sent separately. The synchronization data may e.g. be [MBS Flow ID (MAC SFID,M-CID), packet ID, absolute time/frame ID], or include absolute time. In MBS Flow ID, M-CID is zone-unique and can be used for the absolute time indication. SFID is already included in the R6 signaling. As to Packet ID, available protocols are e.g. IP/GRE/IP/UDP. The application layer ID may not be available since application encryption is expected to be used in MBS. As to IP, no packet ID is available, but Internet Timestamp option (RFC 791) can be used.

ASN GW time stamps the inner IP packets. MC in R6 would mean time value could change between creation of two IP transport packets. In this embodiment, only one ASN GW in the zone can make Time Stamp. In another embodiment two or more access services network gateways may be adapted to make or include absolute time information into one or more packets.

Time granularity is 1 ms. Two packets arriving in ASN GW within the same ms are handled so as to avoid conflict.

An or more embodiments of the invention can provide a handling of a or more time-stamped packets in a BS: All BSs are pre configured to add a fixed and identical timing increment to the time stamp and interpret the resulting value as the transmission instant. Alternatively, the value of the timing increment can be changed dynamically but synchronously for all BSs in the MBS zone.

GRE has an optional sequence number field which sequence number field can be used in R6 as packet ID. If MBS traffic crosses R4, sequence number changes are translated in the C-Plane signaling.
In UDP, no ID is available.
As to the time, reference time for or to be used as the transmission or absolute time can be received from GPS. Frame_ID is not available in MAC and is synchronized between BSs at boot time.

In an embodiment, the timestamp is used as package ID and timing reference. A control protocol from ASN GW is provided or used for instructing BSs what time increment should be added to Timestamp for scheduling.

Alternatively, the control information such as absolute time can be sent for every packet or every Nth packet. It can be used as slip recovery mechanism. If this results in slip correction at BS, the BS needs to report the slipping. Based on the report, ASN-GW can adapt interval (N value) and the higher layer scheduling.

In accordance with at least one or more of the embodiments of the invention, a centralized solution is used. Such a centralized solution is able to cover all cases and to scale up to and be used for large networks. Optionally, a separate synchronization signaling is provided.
With separate control plane, C-P, internet protocol, IP, and optional Internet Timestamp or GRE sequence number can be used, with translation of GRE sequence number at ASN-GW if GRE sequence number is used.
A synchronization of C-P and U-P is optionally provided. This separate control plane can be built on top of Release 1.

In another embodiment with separate synchronization signaling, an embedded solution is provided. A new protocol information element on top of GRE for user IP+ synchronization data in one GRE packet.

WiMAX forum has introduced two data-path (DP) types, 1 and 2. A new DP, type 3, on top of GRE will be needed and also modifications of all data path set up and HO procedures to accommodate the new data path type - its ID and possibly other new information needed for its setup.

In this or others embodiments, GRE sequence number is used. GRE sequence number is or can be used for synchronizing MBS on top of established WiMAX Forum Rel. 1 standard. Timestamp is an unused option in IP packet (RFC 781) and can be used for embodiments of the present invention.

In an alternative embodiment approach to synchronizing at BS, a delay compensation is provided at the gateway, e.g. ASN-GW 55. A latency estimation and compensation at ASN-GW is optionally provided. For additionally compensating for jitter, BS load and BS boot problems, mechanisms may be provided.

This alternative embodiment reduces the slip probability and provides mechanisms for slip recovery. The embodiment may be used for a synchronized transport network or for e.g. WiMAX R6/R4 IP transport.

The embodiments allow or enhance deployment of MBS zones in WiMAX. Embodiments can be used as, or provide, a control point e.g. for or in MBS zones in WiMAX, or can also apply to e.g. UTRA-UTRAN Long Term Evolution, LTE, and e.g. 3GPP System Architecture Evolution, SAE, LTE/SAE Multicast and Broadcast Service, MCBCS, Single Frequency Network, SFN.

Further, in accordance with at least one or all of the embodiments of the invention, a computer program product or module or chip such as a semiconductor module or chip is provided which is configured and adapted to carry out any of the steps or functions when run on a computer or processor.

The features, sequences and contents of the steps or functions or elements described above or shown in the drawings are examples and may also be exchanged or altered, or combined, in any arbitrary manner.

For the purpose of the present invention as described herein above, it should be noted that
- an access technology may be any technology by means of which a user equipment can access an access network (or base station, respectively). Any present or future technology, such as WLAN (Wireless Local Access Network), WiMAX (Worldwide Interoperability for Microwave Access), BlueTooth, Infrared, and the like may be used; although the above technologies are mostly wireless access technologies, e.g. in different radio spectra, access technology in the sense of the present invention may also imply wirebound technologies, e.g. IP based access technologies like cable networks or fixed line.
- an access network may be any device, unit or means by which a station entity or other user equipment may connect to and/or utilize services offered by the access network; such services include, among others, data and/or (audio-) visual communication, data download etc.;
- generally, the present invention is applicable in those network/user equipment environments relying on a data packet based transmission scheme according to which data are transmitted in data packets and which are, for example, based on the Internet Protocol IP. The present invention is, however, not limited thereto, and any other present or future IP or mobile IP (MIP) version, or, more generally, a protocol following similar principles as (M)IPv4/6, is also applicable;
- a user equipment, mobile station or terminal may be any device, unit or means by which a system user may experience services from an access network;
- method steps likely to be implemented as software code portions and being run using a processor at the network element, are software code independent and can be specified using any known or future developed programming language as long as the functionality defined by the method steps is preserved;
- generally, any method step is suitable to be implemented as software or by hardware without changing the idea of the present invention in terms of the functionality implemented;
- method steps and/or devices, units or means likely to be implemented as hardware components at a user equipment or base station, or any module(s) thereof, are hardware independent and can be implemented using any known or future developed hardware technology or any hybrids of these, such as MOS (Metal Oxide Semiconductor), CMOS (Complementary MOS), BiMOS (Bipolar MOS), BiCMOS (Bipolar CMOS), ECL (Emitter Coupled Logic), TTL (Transistor-Transistor Logic), etc., using for example ASIC (Application Specific IC (Integrated Circuit)) components, FPGA (Field-programmable Gate Arrays) components, CPLD (Complex Programmable Logic Device) components or DSP (Digital Signal Processor) components; in addition, any method steps and/or devices, units or means likely to be implemented as software components may for example be based on any security architecture capable e.g. of authentication, authorization, keying and/or traffic protection;
- devices, units or means (e.g. user equipment and base station) can be implemented as individual devices, units or means, but this does not exclude that they are implemented in a distributed fashion throughout the system, as long as the functionality of the device, unit or means is preserved.

### A list of abbreviations used above

- ASN: Access Service Network
- BS: Base Station
- CID: Connection Identifier
- CSN: Connectivity Service Network
- DL: Downlink
- GW: Gateway
- HO: Handover
- LTE: Long Term Evolution
- MBS: Multicast and Broadcast Services
- MCBCS: Multicast and Broadcast Service
- M-CID: Multicast CID
- MS: Mobile Station
- NWG: Network Working Group
- SF: Service Flow
- SFN: Single Frequency Network
- SPWG: Service Provider Working Group
- TDD: Time Division Duplex
- WMF: WiMAX Forum

## Claims

1. Method for providing a higher layer synchronization between base stations in a multicast broadcast system or service wherein a first device sends a time information to a second device which second device responds to the receiving of the time information by using the time information for synchronising with the first device.

2. Method according to claim 1, wherein the time information is an absolute or transmission time.

3. Method according to claim 1 or 2, wherein the time information is an Internet time, global time, atomic time, international atomic time, universal time, or universal time coordinated.

4. Method according to any one of the preceding claims, wherein a first device acts or is configured or adapted to act as a synchronization master of a zone, and at least one base station acts or is configured or adapted to act as a synchronization slave of the zone.

5. Method according to claim 4, wherein the first device is a base station or a gateway such as an access services network gateway, and the second device is a base station.

6. Method according to claim 4 or 5, wherein the first device is a base station in a decentralized implementation, or a gateway such as an access services network gateway in a centralized implementation.

7. Method according to any one of the preceding claims, wherein a synchronization master sends in regular or pre-defined intervals transmission time to be associated with a particular packet(s) to one or more of synchronization slaves for initiating a resynchronization procedure.

8. Method according to any one of the preceding claims, wherein a synchronization master adapts higher layer scheduling to accommodate a balance between latency and resulting buffering.

9. Method according to any one of the preceding claims, wherein the higher layer synchronization is a synchronization of layer 3 or a higher layer in the multicast broadcast system or service.

10. Method according to any one of the preceding claims, wherein the time information is used for a slip recovery mechanism.

11. System for providing a higher layer synchronization between base stations in a multicast broadcast system or service wherein a first device is adapted to send a time information to a second device which second device is adapted to respond, when receiving the time information, by synchronising with the first device using the time information.

12. System according to claim 11, wherein the first device is a base station, a gateway or a synchronization master of a zone, and the second device is a base station which is configured to act as a synchronization slave of the zone.

13. Computer program product comprising code means for performing methods steps of a method according to any one of claims 1 to 10, when run on a computer.

14. A semiconductor chip or module comprising means for performing methods steps of a method according to any one of claims 1 to 10.

15. Device, in particular base station or gateway, for providing a higher layer synchronization between the device and another network entity in a multicast broadcast system or service, wherein the device is adapted to send or receive in regular or pre-defined intervals transmission time to be associated with a particular packet(s) for initiating a synchronization or resynchronization procedure with the another network entity.

16. Device according to claim 15, wherein the device is configured or adapted to act as a synchronization master of a zone such as a multicast broadcast, MBS, zone.

17. Device according to claim 15 or 16, which is adapted to act as a synchronization master providing higher layer scheduling to accommodate a balance between latency and resulting buffering.

18. Device according to any one of claims 15 to 17, wherein the device is a synchronization master which is adapted to send in regular or pre-defined intervals transmission time to be associated with a particular packet(s) to one or more of synchronization slaves for initiating a resynchronization procedure.

19. Device according to claim 15, 16, 17, or 18, comprising a slip recovery mechanism.
